# EUROPEAN PATENT APPLICATION

(11) **EP 4 640 925 A1**
(43) Date of publication of application: **29.10.2025**
(21) Application number: 24764270.5
(22) Date of filing: 24.01.2024
(51) Int. Cl.: C25C 3/12, C09D 1/00

(54) **METHOD FOR PRODUCING PROTECTIVE COATINGS FOR PRE-BAKED ANODE BLOCKS FOR ALUMINIUM ELECTROLYSIS CELLS**

(30) Priority: 28.02.2023 RU 2023104400
(71) Applicant: Obshchestvo S Ogranichennoy Otvetstvennost'yu "Obedinennaya Kompaniya Rusal Inzhenerno- Tekhnologicheskiy Tsentr", Krasnoyarsk 660111 (RU)
(72) Inventor: PUZANOV, Il'ya Ivanovich, Krasnoyarsk, 660111 (RU); ZAVADYAK, Andrej Vasil'evich, Krasnoyarsk, 660111 (RU); KLIMKINA, Nina Valer'evna, Krasnoyarsk, 660111 (RU); NAGIBIN, Gennadij Efimovich, Krasnoyarsk, 660111 (RU); FEDOROVA, Elena Nikolaevna, Krasnoyarsk, 660111 (RU); DEM'YANOV, Aleksej Sergeevich, Krasnoyarsk, 660111 (RU)
(74) Representative: Atalay, Baris
(86) International application number: PCT/RU2024/050018
(87) International publication number: WO 2024/181893

(57) **Abstract**

The invention relates to the field of non-ferrous metallurgy. The method involves mixing crushed dispersed material with an aqueous binder solution until a homogeneous composition is achieved to produce a composition for obtaining a coating for protecting carbon anode blocks of aluminium reduction cells from oxidative degradation, and the application of said composition, wherein pre-ground industrial cryolite-alumina raw material (bath) is used as the dispersed material, and a water-soluble binder comprising a mixture of sodium and polyalkylene oxide derivatives of polymethylene naphthalene sulphonic acids and glycoside derivatives, with a coke residue content of no less than 30 wt.%, is used, and the resulting composition is applied to the prepared surface of the anode blocks, forming a material layer that restricts the access of oxygen and carbon dioxide from the reaction medium to the anode block material.

## Description

### Field of Invention

The invention relates to the field of non-ferrous metallurgy, specifically to the electrolytic production of aluminium, and can be utilised to protect the surface of baked carbon anode blocks of aluminium reduction cells, reducing non-process losses associated with high-temperature oxidation.

### Prior Art

A primary objective of the modem aluminium industry is to enhance the productivity of reduction while minimising resource consumption for metal production. Specifically, reducing the consumption of carbon anode blocks would decrease costs associated with their replacement and lower the overall production cost of commercial aluminium.

At elevated temperatures, the interaction between the carbon material of the anode and atmospheric oxygen, which penetrates the reaction zone, as well as with carbon dioxide (CO₂), a by-product of reduction, results in oxidation and mechanical degradation (crumbling) of the carbon material. Non-process losses of anode material can reach up to 35 kg per tonne of aluminium. Upon entering the bath, the crumbled particles generate 'foam', which promotes the formation of so-called 'spikes' or 'cones', adversely affecting the reduction process and necessitating additional labour for removal. The short operational lifespan of baked anodes, compared to other structural elements, is 25-28 days, significantly influencing the productivity of the reduction cells. Frequent anode replacement incurs economic losses, including expenditure on raw materials, production, baking, removal of spent blocks, and installation of new ones.

Existing inventions aimed at developing anode materials with enhanced resistance to oxidative degradation can be classified into two main categories: alloying the anode paste and applying protective coatings to the anode surface.

Additionally, technologies exist for producing surface protective layers that form directly during the reduction process, specifically designed for metal anodes (US6248227 'Slow consumable non-carbon metal-based anodes for aluminium production cells', published on June 19, 2001; CA2339095 'Nickel-iron-based anodes for aluminium reduction cells', published on February 10, 2000; US6258247 'Bath for electrolytic reduction of alumina and method therefor', published on July 10, 2001; US6419813 'Cathode connector for aluminum low temperature smelting cell', published on July 16, 2002). In such cases, the protective coating at the interface between the anode material and the bath, formed during the reduction process, constitutes an electrochemically active surface whose protective properties are achieved through the formation of metal oxides and oxyfluorides present in the anode material. The oxidation rate of such material corresponds to the dissolution rate of the surface layer in the bath, which is regulated by the thickness and permeability of the surface layer. The resulting surface layer restricts oxygen diffusion to the base material.

However, anode materials composed of metals and alloys have not yet gained widespread industrial adoption due to the following reasons: non-compliance with stringent purity requirements for the produced aluminium, limited lifespan, and the technological and economic impracticality of fully replacing carbon materials with anodes of a new type.

Nevertheless, the development of low-melting (650-750 °C) compositions based on metal oxyfluorides (sodium, calcium, aluminium, and others) to protect the surface of carbon anodes from oxidation represents the most viable process solution. Examples of such compositions applied in the form of suspensions or impregnating pastes on the surface of carbon anodes are provided in the following sources: CN103642284A 'High-temperature antioxidant coating for high-temperature graphite electrode,' published on March 19, 2014; CN101386995A 'Protective antioxidant coating for carbon anode in aluminium reduction and method of its application,' published on August 25, 2010; CN1584125A 'Protection against oxidation of carbon anodes for aluminium reduction, deep antioxidant layer, and method of its application,' published on October 18, 2006; CN101250723A 'Oxidation-resistant layer of an anode made of carbonaceous material for aluminium reduction, method of its production, and coating method,' published on January 13, 2010; CN201510442632.8A 'A type of paint for protection against oxidation of carbon anodes for aluminium reduction,' published on May 29, 2018.

For instance, in CN103642284A 'High-temperature antioxidant coating for high-temperature graphite electrode,' published on March 19, 2014, a composition is proposed comprising 15-50 wt.% Al₂O₃, 5-30 wt.% B₂O₃, 1-5 wt.% MgO, 0-5 wt.% dispersion agent (acidic ammonium citrate, polyamic acid, sodium tripolyphosphate), as well as a solution of phosphoric acid and 20-70 wt.% Al(OH)₃. A significant drawback of this composition is the presence of phosphorus. Phosphorus has a variable oxidation state and actively participates in oxidation-reduction reactions, altering the physicochemical balance during reduction, which leads to power losses, a decrease in current density, and the transfer and accumulation of phosphorus in the metal.

A method for preparing a protective composition for a carbon-graphite anode is described in CN101386995A 'Protective antioxidant coating for carbon anode in aluminium reduction and method of its application,' published on August 25, 2010. The pre-cleaned carbon-graphite surface of the anode is coated by spraying in layers (up to three layers, with each layer having a thickness of 0.1-0.2 mm) using a composition containing 1-25 wt.% bisphenol A-type resin, 0.1-16 wt.% B₄C and/or 2-13 wt.% boron oxide, 15-50 wt.% Al₂O₃, 0-20 wt.% pseudoboehmite, 10-30 wt.% alumina sol, 0.1-0.3 wt.% antifoaming agent, with the remainder being water. The patent authors do not disclose the dispersion characteristics of the composition, which influence the formation of the microstructure of the coating and, consequently, its mechanical properties. A disadvantage of this invention is the inclusion of boron carbide layers in the composition, which, upon contact with the bath, may lead to the gradual migration of boron into aluminium.

The composition of the protective coating is further detailed in CN1584125A 'Protection against oxidation of carbon anodes for aluminium reduction, deep antioxidant layer, and method of its application,' published on October 18, 2006, where a 15% pre-prepared aluminium trioxide sol is used as a base. The material comprises a mixture of the aforementioned Al₂O₃ sol (5-60 wt.%), AlF₃ (d_{avg}<74 mcm, up to 30 wt.%), Al₂O₃ powder (d_{avg}<165 mcm, 16-25 wt.%), B₂O₃ powder (d_{avg}<165 mcm, 1-3 wt.%), and 20% polyvinyl alcohol (7 g), which is prepared at room temperature until a homogeneous paste is formed. The composition may be applied in multiple continuous layers (not exceeding four) onto the prepared surface of the baked anode by spraying or brushing. The coating is dried for 12 hours, after which additional layers may be applied if necessary. However, the authors do not specify the thickness of the protective coating layers, nor do they disclose details of the composition preparation process, particularly the sequence of component mixing. A disadvantage of this invention is also the presence of boron compounds in the composition, which is undesirable due to the potential contamination of aluminium with boron impurities.

All the considered compositions contain various phases of Al₂O₃ and fluorine-containing substances as the main components, which should ensure the achievement of the technical result, that is, the implementation of the protective functions of the coating material due to the formation of aluminium oxyfluorides. Formation of aluminium oxyfluorides by reactions:

2AlF₃+Al₂O₃=Al₂F₆O₂+Al³⁺ (1)

2AlF₃+AlO₂=Al₂F₆O²⁻+A1³⁺ (2)

2AlF₃+O²⁻=Al₂F₆O²⁻ (3)

Al₂F₆O²⁻-2e=Al₂F₆O (4)

Al₂F₆O=Al₂F₆+½O₂, (5)

suppresses the formation of free oxygen at the anode during reduction, thereby reducing the oxidation rate of the anode material.

However, coatings based on oxyfluorides can only be implemented in the form of compositions whose components do not alter the physicochemical properties of the reduction process and do not degrade the quality of the produced aluminium. In this regard, the most stable protective coating compositions should contain components naturally present in the system during reduction, in particular AlF₃, NaF, and Al and/or Al₂O₃, along with modifying components that ensure antioxidant protective properties and adhesion of the coating to the carbon surface of the anode.

The invention disclosed in CN101250723A 'Oxidation-resistant layer of an anode made of carbonaceous material for aluminium reduction, method of its production, and coating method,' published on January 13, 2010, describes a gradient multilayer material composed of a base primer layer, an intermediate barrier layer, and an outer protective layer.

The application of a base primer layer onto the surface of the baked carbon-graphite anode enhances the adhesion of the primary protective coating composition to the anode surface and reduces mechanical and thermal stresses. The composition of the primer layer suspension comprises 15-45 vol.% aqueous fluoride resin, 25-50 vol.% boron-containing compound (e.g., B₂O₃, d_{avg}<165 mcm), 1-25 vol.% alumina sol (d_{avg}<74 mcm), 5-58 vol.% thermally resistant powder (Al₂O₃, d_{avg}=74 mcm), 0.1-0.5 vol.% antifoaming agent, and 12-40 vol.% water. The primer coating suspension is applied by spraying in 2-3 layers at 1-3 hour intervals.

The intermediate barrier layer, as specified in this invention, is designed to insulate the carbon matrix from the external oxidising environment. The suspension composition of this layer consists of 4-22 vol.% aqueous fluoride resin, 1-16 vol.% B₂O₃ (d_{avg}<165 mcm), 1-20 vol.% alumina sol (d_{avg}<74 mcm), 1-26 vol.% thermally resistant powder (Al₂O₃, d_{avg}=74 mcm), 0.2-0.5 vol.% antifoaming agent, and 21-45 vol.% water. This suspension is applied by spraying onto the dried primer layer one to two times and then dried for 1-3 hours under normal conditions.

The composition of the outer protective layer includes 3-20 vol.% aqueous fluoride resin, 1-16 vol.% B₂O₃ (d_{avg}<165 mcm), 10-30 vol.% alumina sol, 6-59 vol.% thermally resistant powder (Al₂O₃, d_{avg}=74 mcm), 0.1-0.5 vol.% antifoaming agent, and 22-42 vol.% water. The resulting paste is sprayed one to two times and dried for 1-3 hours under normal conditions. The final coating has a density of 0.5-2 g/m².

The authors of this invention outline the sequence for introducing components during the preparation of the coating material. According to the patented formulation, an alumina sol containing at least 5% dispersed phase and an antifoaming agent (e.g., DF-558 or CLT-371) are first added to the specified amount of water, followed by a thermally resistant component selected from Al₂O₃, AlF₃, norbide, or their mixture. An aqueous fluoride resin with an F content of 12-50% (M = 4×10³ - 10×10⁴) and a boron-containing compound (B₂O₃ or H₃BO₃) are introduced at the final stage of preparation.

A key advantage of this invention is the use of a base primer layer to ensure sufficient adhesion of the coating to the carbon surface of the anode. Additionally, all proposed functional layers contain Al₂O₃ and/or AlF₃, along with fluoride resin, which contribute to the realisation of protective properties through reaction mechanisms (1-6). The authors of this invention note that after drying and baking at 900 °C, the multilayer material exhibits a homogeneous structure without cracks. However, industrial test results are not provided. It should also be noted that from a technological perspective, the implementation of the proposed multilayer coating requires significant time and labour in an industrial setting. Furthermore, despite the effective protective properties of the coatings, the presence of boron in the composition is undesirable. At the initial stage of reduction, the interaction of aluminium and boron leads to the formation of liquid-phase aluminium borate, which forms a continuous layer, filling defects on the anode surface and hindering oxygen diffusion. However, upon subsequent contact with the bath melt, boron transitions into the bath and ultimately into the resulting metal.

An implementation of a protective coating for a carbon-graphite anode is proposed in CN201510442632.8A 'A type of paint for protection against oxidation of carbon anodes for aluminium reduction,' published on May 29, 2018. The authors propose a suspension material comprising: Al₂O₃ powder (30-40 wt.%), NaF (10-20 wt.%), AlF₃ (10-20 wt.%), a composite antioxidant in the form of a mixture of metallic aluminium and boron powders (1.0-5.0 wt.%), a binding agent (liquid glass) (10-25 wt.%), sodium bentonite or attapulgite (2-5 wt.%), with the remainder being solvent (water). The preferred fineness of the components is as follows: Al₂O₃ ≤ 10 mcm, NaF ≤ 45 mcm, AlF₃ ≤ 45 mcm, components of the aluminium and boron powder mixture ≤ 5 mcm.

The compositions of protective suspensions that demonstrated the best results during testing under reduction conditions are presented in Table 1.

**Table 1. Compositions of the protective suspension presented in the prototype.**

| No | Component content, wt.%. | | | | | | | |
|---|---|---|---|---|---|---|---|---|
| | Al₂O₃ powder | NaF | AlF₃ | Al and B powder mixture | Boron | Liquid glass | Sodium bentonite | Water |
| 1 | 30 | 10 | 10 | 1 | 3 | 20 | 4 | 22 |
| 2 | 32 | 12 | 10 | 0.8 | 3.5 | 20 | 3 | 18.7 |
| 3 | 35 | 13 | 10 | 0.5 | 4 | 22 | 2 | 13.5 |
| 4 | 35 | 11 | 10 | 0.8 | 2.5 | 20 | 3 | 17.7 |

The suspension was initially applied to the anode surface, including the side surfaces, by spraying and/or brushing in two layers until a thickness of 0.5 mm was achieved. It was then dried for 12 hours. The number of layers may be increased, with each subsequent layer applied only after the complete drying of the previous one.

From the perspective of employing this invention in the development of a protective coating material for carbon anodes of an aluminium reduction cell against oxidation, the following drawbacks can be noted:
- The presence of boron in elemental form or as part of the initial components is unacceptable, as its transition into aluminium is inevitable.
- The use of liquid glass as a binder: since liquid glass contains the SiO₃²⁻ anion, its inclusion in the composition is not permitted, as silicon would transfer into the aluminium melt.

The closest prior art in terms of technical essence and implementation to the claimed invention is that described in patent RU 2387741 'Protective coatings for anodes', IPC C25C3/12, published on April 27, 2010, which discloses a protective coating comprising two layers: a pre-applied coating (underlayer) and a primary coating (top layer), which together provide protection for the anode. The underlayer consists of finely ground carbon material (average particle size of approximately 15 mcm), resistant to oxidation and dispersed in a binder solution. An aqueous solution of sodium or potassium silicate is used as the binder. The top layer of the coating comprises finely ground dispersed material, characterised by a bimodal particle size distribution, predominantly consisting of alumina or a mixture of alumina and cryolite, dispersed in a binder solution with a cryolite content not exceeding 40 wt.%. The authors of the invention describe the application method and highlight that the use of a protective coating system enhances oxidation resistance during the burnout of the baked anode, reduces the ingress of undesirable impurities into the molten bath, and extends the service life of the anode.

The disadvantages of the prototype include:
- The prolonged duration of the coating application process, as the coating consists of two layers.
- Low efficiency under industrial application conditions and additional costs associated with drying the coating, which occurs in multiple stages (after applying the underlayer, it is dried at temperatures of 80 to 150 °C for 3 hours, followed by the application of the main coating layer, which is then dried at temperatures ranging from 80 to 200 °C for 2-8 hours).
- The use of aqueous solutions of silicates as a binder, such as sodium silicate Na₂O(SiO₂)ₙ or potassium silicate K₂O(SiO₂)ₙ , i.e., liquid glass. Since liquid glass contains the SiO₃²⁻ anion, its use in the composition is not permitted, as silicon would transfer into the aluminium melt and contaminate the metal.

### Invention Disclosure

The objective of the proposed invention and the resulting technical effect is the development of a coating material (composition) and a method for its production, ensuring the protection of baked carbon anodes in aluminium reduction cells from oxidative degradation and reducing the ingress of undesirable impurities into the molten bath.

The problem is addressed, and the result is achieved by means of a method for manufacturing a coating material for protecting carbon anode blocks of aluminium reduction cells from oxidative degradation, which includes the preparation of a composition from industrial cryolite-alumina raw materials (bath) containing fluorine and aluminium compounds, combined with a water-soluble binder, and the application of the resulting composition onto the prepared surface of the anode blocks by spraying, thereby forming a material layer that restricts the access of oxygen and carbon dioxide from the reaction environment of the reduction process to the anode block material. The formation of this layer on the surface of the anode blocks, in accordance with the claimed invention, occurs through the generation of aluminium oxyfluorides in accordance with reactions (1-5), which suppresses the formation of free oxygen on the anode during reduction, consequently reducing its oxidation rate.

In accordance with the proposed invention, which includes the preparation of a composition from industrial cryolite-alumina raw materials with a binder and the application of the resulting mixture onto the surface of baked anodes, the distinguishing feature is the use of bath powder to implement the protective functions of the coating, with the granularity characterized by an average particle size of 0.01-0.315 mm, along with a water-soluble binder to achieve the required level of antioxidant properties and adhesion of the coating material to the carbon surface.

The technical result is achieved, among other factors, due to the following distinctive features of the invention:
- The presence of fluorine and aluminium compounds in the material, which facilitates the formation of aluminium oxyfluorides in the protective layer of the material directly during the operation of the anode blocks and ensures the purity of the produced aluminium when the protective coating material enters and dissolves in the bath.
- The use of a non-toxic, process water-soluble additive (hazard class 4 or lower) in the coating composition, which consists of a mixture of sodium and polyalkylene oxide derivatives of polymethylene naphthalene sulphonic acids and glycoside derivatives, with a coke residue content of no less than 30 wt.%.

The primary components of the coating composition for protecting carbon anode blocks of aluminium reduction cells from oxidative degradation are cryolite (80-90 wt.%) and alumina (20-10 wt.%), while the phase composition of the industrial cryolite-alumina raw material (bath) is represented by the following compounds: Na₃AlF₆, Na₅Al₃F₁₄, α-Al₂O₃, CaF₂, Na₂Ca₃Al₂F₁₄ and K₂NaAlF₆, with a water-soluble binder comprising a mixture of sodium and polyalkylene oxide derivatives of polymethylene naphthalene sulphonic acids and glycoside derivatives, with a coke residue content of no less than 30 wt.%.

The combination of these features enables the formation of a protective coating with a thickness of 3-5 mm, which constitutes a continuous gas-impermeable layer, adheres to the carbon material of baked anode blocks, exhibits resistance to cracking, and possesses sufficient density to limit oxygen diffusion to the carbon surface of the anode. Additionally, the application method and coating composition comply with low toxicity and environmental safety requirements.

### Implementation of the Method

The main components of the protective coating composition are cryolite (80-90 wt.%) and alumina (20-10 wt.%), while the phase composition of industrial cryolite-alumina raw material (bath) includes the following compounds: Na₃AlF₆, Na₅Al₃F₁₄, α-Al₂O₃, CaF₂, Na₂Ca₃Al₂F₁₄ and K₂NaAlF₆.

The bath is pre-crushed to a particle size of less than 1 mm. After crushing, grinding, and screening, the bath is in the form of a powder with the granularity characterised by an average particle size of 0.01-0.315 mm. The proposed granularity is technologically preferable as it prevents particle settling during preparation and ensures the necessary rheological properties for applying the protective coating composition by spraying.

The protective coating composition for baked anode blocks of aluminium reduction cells is prepared from a mixture of pre-processed bath containing fluorine and aluminium compounds and a water-soluble binder, which consists of a mixture of sodium and polyalkylene oxide derivatives of polymethylene naphthalene sulphonic acids and glycoside derivatives, with a coke residue content of no less than 30 wt.%. The aqueous solution of the binder is gradually introduced until the required consistency and viscosity of the composition are achieved, with continuous stirring to ensure uniform distribution of components throughout the volume.

The prepared composition is then applied using a pneumatic sprayer and dried at room temperature for 24 hours on the surface of laboratory samples of anode blocks that have been pre-cleaned of dust and contaminants or on the surface of industrial anode blocks.

To determine mass loss due to oxidation, laboratory samples of anode blocks with protective coatings and reference samples without coatings are placed in a furnace at 750 °C for 6 hours (heating rate - 5 °C/min, cooling - at the natural furnace cooling rate). To monitor weight changes during oxidation, laboratory samples are weighed before and after oxidation using a balance with a resolution of 0.1 mg.

Table 2 presents the composition of laboratory samples of protective coatings and test results of laboratory samples of anode blocks with coatings at 750 °C for 6 hours.

**Table 2. Composition of laboratory samples of protective coatings and test results of laboratory samples of anode blocks with coatings at 750 °C for 6 hours.**

| No | Component content, wt.%. | | Weight ratio (dry matterr/ binder) | LOM by oxidation, % | Remarks |
|---|---|---|---|---|---|
| | Cryolite | Al₂O₃ | | | |
| 1 | 95 | 5 | 3:1/4:1 | 60/57 | Insufficient viscosity, excessive fluidity of the composition |
| 2 | 90 | 10 | 3:1/4:1 | 34/30 | Good adhesion, absence of cracks |
| 3 | 85 | 15 | 3:1/4:1 | 26/24 | |
| 4 | 80 | 20 | 3:1/4:1 | 30/27 | |
| 5 | 70 | 30 | 3:1/4:1 | 49/45 | Cracking / Poor adhesion |
| 6 | 60 | 40 | 3:1/4:1 | 51/56 | Cracking / High viscosity of the composition |
| 7 | Uncoated anode block (witness specimen) | | | 68 | |

According to the results presented in Table 2, the highest oxidation resistance is demonstrated by compositions No. 2-4, containing cryolite (80-90 wt.%) and Al₂O₃ (20-10 wt.%) at a dry substance-to-binder ratio of 3:1 or 4:1.

When the Al₂O₃ content is less than 10 wt.%, the viscosity of the composition is significantly reduced, leading to the coating flowing off the protected surface. With an increase in the Al₂O₃ content above 20 wt.%, loss of adhesion to the surface of the anode block and cracking are observed, while at an Al₂O₃ content of up to 40 wt.%, the composition is also characterised by increased viscosity, which complicates the spraying application process.

Table 3 presents the phase composition of cryolite-alumina raw materials used for producing coatings of two compositions (No. 3 and No. 6 from Table 2) based on X-ray phase analysis data and the results of tests on laboratory samples of anode blocks with coatings at 750 °C for 6 hours.

**Table 3. Phase composition of cryolite-alumina raw materials used for producing protective coatings* and the results of tests on laboratory samples of anode blocks with coatings at 750 °C for 6 hours**

| No | Component content, wt.%. | | | | | | Weight ratio (dry matter/ binder) | LOM by oxidation, % |
|---|---|---|---|---|---|---|---|---|
| | Na₃AlF₆ | Na₂Ca₃AlF₁₄ | Na₅Al₃F₁₄ | α-Al₂O₃ | CaF₂ | K₂NaAlF₆ | | |
| 1 | 61.4 | 0.4 | 20.9 | 12.6 | 4.2 | 0.3 | 3:1 | 26 |
| 2 | 61.4 | 0.4 | 20.9 | 12.6 | 4.2 | 0.3 | 4:1 | 24 |
| 3 | 23.3 | 2.8 | 34.6 | 37.8 | 1.2 | 0.2 | 3:1 | 51 |
| 4 | 23.3 | 2.8 | 34.6 | 37.8 | 1.2 | 0.2 | 4:1 | 56 |
| 5 | Uncoated anode block (witness specimen) | | | | | | | 68 |

| | | | | | | | | |
|---|---|---|---|---|---|---|---|---|
| *Composition No. 3 from Table 2 - items 1-2; Composition No. 6 - items 3-4. | | | | | | | | |

According to the results presented in Tables 2-3, it is evident that protective coatings produced from cryolite-alumina raw materials with a cryolite phase (Na₃AlF₆) content of 61.4 wt.%, chiolite (NasAl₃F₁₄) 20.9 wt.%, and corundum (α-Al₂O₃) 12.6 wt.% at a dry substance-to-binder ratio of 3:1 or 4:1 exhibit the highest oxidation resistance. This composition was recommended for industrial testing.

Under industrial conditions, the mass of anode blocks with protective coatings and witness anode blocks without coatings was monitored before testing, along with the mass of residual butts after testing. The phase composition of the coating material was also analysed before and after testing, confirming the absence of impurities that could contaminate the metal. Table 4 presents the results of X-ray phase analysis and a comparison of the initial bath powder sample with the protective coating sample after industrial testing.

**Table 4. Results of comparison of the initial cryolite-alumina raw material (bath) sample and the coating sample after testing (wt.%).**

| **Chemical formula** | **Bath** | **Coating after testing** |
|---|---|---|
| Na₃AlF₆ (cryolite) | 61.4 | 66.0 |
| Na₂Ca₃Al₂F₁₄ | 0.4 | - |
| Na₅Al₃F₁₄ (chiolite) | 20.9 | 2.3 |
| α-Al₂O₃ (corundum) | 12.6 | 27.0 |
| CaF₂ | 4.2 | 3.3 |
| K₂NaAlF₆ | 0.3 | - |
| Na₂(SO₄) | - | 1.4 |

For the coating sample after testing, an increase in the content of α-Al₂O₃ (27 wt.%) and a corresponding decrease in the content of the Na₅Al₃F₁₄ (chiolite) phase were observed. A small amount of Na₂(SO₄) (1.4 wt.%) was detected in the composition, which is associated with the use of a binder, consisting of a mixture of sodium and polyalkylene oxide derivatives of polymethylene naphthalene sulphonic acids and glycoside derivatives, in the coating formulation.

### Example 1

The following materials were used to produce protective coatings:
- Bath with the following phase composition: Na₃AlF₆ (61.4 wt.%), Na₅Al₃F₁₄ (20.9 wt.%), α-Al₂O₃ (12.6 wt.%), CaF₂ (4.2 wt.%), Na₂Ca₃Al₂F₁₄ (0.4 wt.%), and K₂NaAlF₆ (0.3 wt.%).
- Water-soluble binder (aqueous solution 1:2).

The bath was preliminarily crushed and sieved to a granularity of 0.01-0.315 mm. The initial components of the mixture were then dosed at a ratio of 3:1 (three parts by weight of bath to one part by weight of binder), with the binder being introduced in stages. The components were subsequently mixed using a mechanical mixer until a homogeneous composition was achieved. If necessary, the binder content was further adjusted to ensure the required viscosity of the composition for uniform application.

The protective coating was applied to the anode block samples, which had been pre-cleaned of dust using compressed air, by pneumatic spraying. Visual inspection was conducted to ensure the uniformity and homogeneity of the composition distribution. The coated samples were then dried at room temperature for 24 hours and subjected to heat treatment in a furnace at 750 °C for 6 hours (heating rate - 5 °C/min, cooling at the natural furnace cooling rate). The thickness of the protective coating was 3±1 mm.

To determine mass loss due to oxidation, laboratory samples of anode blocks with protective coatings and reference samples without coatings were placed in a furnace at 750 °C for 6 hours (heating rate - 5 °C/min, cooling at the natural furnace cooling rate). To monitor weight changes during oxidation, laboratory samples were weighed before and after oxidation using a balance with a resolution of 0.1 mg. The relative mass loss was 26%.

### Example 2

The following materials were used to produce protective coatings:
- Bath with the following phase composition: Na₃AlF₆ (61.4 wt.%), Na₅Al₃F₁₄ (20.9 wt.%), α-Al₂O₃ (12.6 wt.%), CaF₂ (4.2 wt.%), Na₂Ca₃Al₂F₁₄ (0.4 wt.%), and K₂NaAlF₆ (0.3 wt.%).
- Water-soluble binder (aqueous solution 1:2).

The bath was preliminarily crushed and sieved to a granularity of 0.01-0.315 mm. The initial components of the mixture were then dosed at a ratio of 4:1 (four parts by weight of bath to one part by weight of binder), with the binder being introduced in stages. The components were subsequently mixed using a mechanical mixer until a homogeneous composition was achieved. If necessary, the binder content was further adjusted to ensure the required viscosity of the composition for uniform application.

The protective coating was applied to the anode block samples, which had been pre-cleaned of dust using compressed air, by pneumatic spraying. Visual inspection was conducted to ensure the uniformity and homogeneity of the composition distribution. The coated samples were then dried at room temperature for 24 hours and subjected to heat treatment in a furnace at 750 °C for 6 hours (heating rate - 5 °C/min, cooling at the natural furnace cooling rate). The thickness of the protective coating was 3±1 mm.

To determine mass loss due to oxidation, laboratory samples of anode blocks with protective coatings and reference samples without coatings were placed in a furnace at 750 °C for 6 hours (heating rate - 5 °C/min, cooling at the natural furnace cooling rate). To monitor weight changes during oxidation, laboratory samples were weighed before and after oxidation using a balance with a resolution of 0.1 mg. The relative weight loss was 24%.

### Example 3

The following materials were used to produce protective coatings:
- Bath with the following phase composition: Na₃AlF₆ (23.3 wt.%), NasAl₃F₁₄ (34.6 wt.%), α-Al₂O₃ (37.8 wt.%), Na₂Ca₃Al₂F₁₄ (2.8 wt.%), CaF₂ (1.2 wt.%) and K₂NaAlF₆ (0.2 wt.%);
- Water-soluble binder (aqueous solution 1:2).

The bath was preliminarily crushed and sieved to a granularity of 0.01-0.315 mm. The initial components of the mixture were then dosed at a ratio of 3:1 (three parts by weight of bath to one part by weight of binder), with the binder being introduced in stages. The components were subsequently mixed using a mechanical mixer until a homogeneous composition was achieved. If necessary, the binder content was further adjusted to ensure the required viscosity of the composition for uniform application.

The protective coating was applied to the anode block samples, which had been pre-cleaned of dust using compressed air, by pneumatic spraying. Visual inspection was conducted to ensure the uniformity and homogeneity of the composition distribution. The coated samples were then dried at room temperature for 24 hours and subjected to heat treatment in a furnace at 750 °C for 6 hours (heating rate - 5 °C/min, cooling at the natural furnace cooling rate). The thickness of the protective coating was 3±1 mm.

To determine mass loss due to oxidation, laboratory samples of anode blocks with protective coatings and reference samples without coatings were placed in a furnace at 750 °C for 6 hours (heating rate - 5 °C/min, cooling at the natural furnace cooling rate). To monitor weight changes during oxidation, laboratory samples were weighed before and after oxidation using a balance with a resolution of 0.1 mg. The relative weight loss was 51%.

### Example 4

The following materials were used to produce protective coatings:
- Bath with the following phase composition: Na₃AlF₆ (23.3 wt.%), Na₅Al₃F₁₄ (34.6 wt.%), α-Al₂O₃ (37.8 wt.%), Na₂Ca₃Al₂F₁₄ (2.8 wt.%), CaF₂ (1.2 wt.%) and K₂NaAlF₆ (0.2 wt.%);
- Water-soluble binder (aqueous solution 1:2).

The bath was preliminarily crushed and sieved to a granularity of 0.01-0.315 mm. The initial components of the mixture were then dosed at a ratio of 3:1 (three parts by weight of bath to one part by weight of binder), with the binder being introduced in stages. The components were subsequently mixed using a mechanical mixer until a homogeneous composition was achieved. If necessary, the binder content was further adjusted to ensure the required viscosity of the composition for uniform application.

The protective coating was applied to the anode block samples, which had been pre-cleaned of dust using compressed air, by pneumatic spraying. Visual inspection was conducted to ensure the uniformity and homogeneity of the composition distribution. The coated samples were then dried at room temperature for 24 hours and subjected to heat treatment in a furnace at 750 °C for 6 hours (heating rate - 5 °C/min, cooling at the natural furnace cooling rate). The thickness of the protective coating was 3±1 mm.

To determine mass loss due to oxidation, laboratory samples of anode blocks with protective coatings and reference samples without coatings were placed in a furnace at 750 °C for 6 hours (heating rate - 5 °C/min, cooling at the natural furnace cooling rate). To monitor weight changes during oxidation, laboratory samples were weighed before and after oxidation using a balance with a resolution of 0.1 mg. The relative weight loss was 56%.

### Example 5

The following materials were used to produce protective coatings for the anode blocks of the reduction cells with baked anodes:
- Bath with the following phase composition: Na₃AlF₆ (61.4 wt.%), Na₅Al₃F₁₄ (20.9 wt.%), α-Al₂O₃ (12.6 wt.%), CaF₂ (4.2 wt.%), Na₂Ca₃Al₂F₁₄ (0.4 wt.%), and K₂NaAlF₆ (0.3 wt.%);
- Water-soluble binder (aqueous solution 1:2).

The bath was preliminarily crushed and sieved to a granularity of 0.01-0.315 mm. The initial components of the mixture were then dosed at a ratio of 4:1 (four parts by weight of bath to one part by weight of binder), with the binder being introduced in stages. The components were subsequently mixed using a mechanical mixer until a homogeneous composition was achieved. If necessary, the binder content was further adjusted to ensure the required viscosity of the composition for uniform application.

By the method of pneumatic spraying, the protective coating was applied to the side surfaces of the anode blocks, which had been previously cleaned of dust using compressed air. The coatings can also be applied using mechanical (centrifugal) sprayers. Visual inspection was conducted to ensure the uniformity and homogeneity of the composition distribution. The thickness of the protective coating was 3-5 mm. After the installation of the coated anode blocks and testing in the reduction cell, the quality of the coatings was visually inspected for defects, including voids, cracks, delamination, and signs of carbon material burnout during testing. As a result of the inspection, no signs of oxidation were observed on the coated areas of the anode blocks.

For industrial testing and comparison, reference anode blocks without coatings were also tested. According to the test programme, the physical parameters of each butt were measured, including overall dimensions and weight. Industrial tests in reduction cells demonstrated that the use of the protective composition reduced the consumption of baked anodes by 3.2 kg/t of aluminium.

The scope of legal protection, considering the disclosure of the invention, is requested for a method of producing a coating for the protection of carbon anode blocks, which includes mixing crushed dispersed material with an aqueous binder solution until a homogeneous composition is achieved and applying the composition. In this method, pre-ground industrial cryolite-alumina raw material (bath) is used as the dispersed material. The coating composition is prepared from industrial cryolite-alumina raw material (bath) containing fluorine and aluminium compounds, combined with a water-soluble binder, thereby providing antioxidant properties and adhesion of the coating material to the carbon surface. The resulting composition is applied to the prepared surface of the anode blocks, forming a material layer that restricts the access of oxygen and carbon dioxide from the reaction medium to the anode block material.

A water-soluble binder comprising a mixture of sodium and polyalkylene oxide derivatives of polymethylene naphthalene sulphonic acids and glycoside derivatives, with a coke residue content of no less than 30 wt.%, may be used. Preferably, the components of the composition are mixed at a dispersed material-to-water-soluble binder ratio of 3:1 to 4:1. To ensure the protective functions of the coating, bath powder is used, characterised by a granularity with an average particle size of 0.01-0.315 mm; if necessary, the bath is ground and screened to achieve the specified size. As the main components of the coating composition for protecting carbon anode blocks of aluminium reduction cells from oxidative degradation, cryolite (80-90 wt.%) and alumina (20-10 wt.%) may be selected, while the phase composition of industrial cryolite-alumina raw material (bath) is preferably represented by the following compounds: Na₃AlF₆, NasAl₃F₁₄, α-Al₂O₃, CaF₂, Na₂Ca₃Al₂F₁₄ and K₂NaAlF₆, along with a water-soluble binder. The method involves the use of pneumatic spraying to apply the protective coating on the side surfaces of the anode blocks, as well as applying the protective coating composition to the surfaces of carbon anode blocks, which have been previously cleaned of dust using compressed air, as well as applying the coating using mechanical sprayers, in particular centrifugal sprayers.

The scope of legal protection also includes a coating composition for protecting carbon anode blocks of aluminium reduction cells from oxidative degradation. The main components of the composition are cryolite (80-90 wt.%) and alumina (20-10 wt.%), while the phase composition of industrial cryolite-alumina raw material (bath) is represented by the following compounds: Na₃AlF₆, Na₅Al₃F₁₄, α-Al₂O₃, CaF₂, Na₂Ca₃Al₂F₁₄ and K₂NaAlF₆, along with a water-soluble binder, which consists of a mixture of sodium and polyalkylene oxide derivatives of polymethylene naphthalene sulphonic acids and glycoside derivatives, with a coke residue content of no less than 30 wt.%.

Thus, a coating material (composition) and a method for its production are proposed, ensuring the protection of baked carbon anodes in aluminium reduction cells from oxidative degradation and reducing the ingress of undesirable impurities into the molten bath.

## Claims

1. A method of producing a coating for the protection of carbon anode blocks, which includes mixing crushed dispersed material with an aqueous binder solution until a homogeneous composition is achieved and applying the composition, **characterized in that** pre-ground industrial cryolite-alumina raw material (bath) is used as the dispersed material, wherein the coating composition is prepared from industrial cryolite-alumina raw material (bath) containing fluorine and aluminium compounds, combined with a water-soluble binder, thereby providing antioxidant properties and adhesion of the coating material to the carbon surface, the resulting composition is applied to the prepared surface of the anode blocks, forming a material layer that restricts the access of oxygen and carbon dioxide from the reaction medium to the anode block material.

2. The method of claim 1, **characterized in that** a water-soluble binder comprising a mixture of sodium and polyalkylene oxide derivatives of polymethylene naphthalene sulphonic acids and glycoside derivatives, with a coke residue content of no less than 30 wt.%, is used.

3. The method of claim 1, **characterized in that** the components of the composition are mixed at a dispersed material-to-water-soluble binder ratio of 3:1 to 4:1.

4. The method of claim 1, **characterized in that** to ensure the protective functions of the coating, bath powder is used, **characterised by** a granularity with an average particle size of 0.01-0.315 mm; if necessary, the bath is ground and screened to achieve the specified size.

5. The method of claim 1, **characterized in that** the primary components of the coating composition for protecting carbon anode blocks of aluminium reduction cells from oxidative degradation are cryolite (80-90 wt.%) and alumina (20-10 wt.%), while the phase composition of the industrial cryolite-alumina raw material (bath) is represented by the following compounds: Na₃AlF₆, Na₅Al₃F₁₄, α-Al₂O₃, CaF₂, Na₂Ca₃Al₂F₁₄ and K₂NaAlF₆, and a water-soluble binder.

6. The method of claims 1-5, which provides for the use of pneumatic spraying to apply the protective coating on the side surfaces of the anode blocks.

7. The method of claims 1-5, which provides for the use of pneumatic spraying to apply the protective coating composition to the surfaces of carbon anode blocks, which have been previously cleaned of dust using compressed air.

8. The method of claims 1-5, which provides for applying the coating using mechanical sprayers, in particular centrifugal sprayers.

9. A coating composition for protecting carbon anode blocks of aluminium reduction cells from oxidative degradation, **characterized in that** the primary components of the composition are cryolite (80-90 wt.%) and alumina (20-10 wt.%), while the phase composition of the industrial cryolite-alumina raw material (bath) is represented by the following compounds: Na₃AlF₆, Na₅Al₃F₁₄, α-Al₂O₃, CaF₂, Na₂Ca₃Al₂F₁₄ and K₂NaAlF₆, with a water-soluble binder comprising a mixture of sodium and polyalkylene oxide derivatives of polymethylene naphthalene sulphonic acids and glycoside derivatives, with a coke residue content of no less than 30 wt.%.
